Europäisches Patentamt

European Patent Office

Office européen des brevets

(11) Veröffentlichungsnummer: **0 178 534**
**B1**

(12) # EUROPÄISCHE PATENTSCHRIFT

(45) Veröffentlichungstag der Patentschrift:
**18.05.88**

(51) Int. Cl.⁴: **F 02 B 39/10,** F 02 B 37/14,
F 02 D 41/04, F 02 D 43/04

(21) Anmeldenummer: **85112474.3**

(22) Anmeldetag: **02.10.85**

(54) Steuereinrichtung für einen Verbrennungsmotor mit einem Abgasturbolader.

(30) Priorität: **16.10.84 DE 3437872**

(43) Veröffentlichungstag der Anmeldung:
**23.04.86 Patentblatt 86/17**

(45) Bekanntmachung des Hinweises auf die Patenterteilung:
**18.05.88 Patentblatt 88/20**

(84) Benannte Vertragsstaaten:
**CH DE FR GB IT LI NL SE**

(56) Entgegenhaltungen:
EP-A-0 079 100
DE-A-2 206 450
DE-A-2 951 136
FR-A-21 833 337

(73) Patentinhaber: **M.A.N. - B&W Diesel GmbH,
Stadtbachstrasse 1, D-8900 Augsburg 1 (DE)**
Patentinhaber: **Siemens Aktiengesellschaft Berlin
und München, Wittelsbacherplatz 2, D-8000
München 2 (DE)**

(72) Erfinder: **Bozung, Hanns- Günther, Dr.,
Höhenstrasse 2, D-8902 Neusäss (DE)**
Erfinder: **Nachtigal, Joachim, Dipl.- Ing.,
Mühläckerstrasse 15, D-8524 Hetzles (DE)**

(74) Vertreter: **Mehl, Ernst, Dipl.- Ing., Postfach 22 01
76, D-8000 München 22 (DE)**

## Beschreibung

Die Erfindung bezieht sich auf eine Steuereinrichtung gemäß dem Oberbegriff des Patentanspruches 1.

Eine Steuereinrichtung dieser Art ist aus der EP-A-0 079 100 bekannt. Bei dieser bekannten Steuereinrichtung wird die elektrische Energie im Generatorbetrieb des Elektromotors in einen von einer Batterie ausgebildeten elektrischen Speicher geliefert, um die Energie für einen folgenden Beschleunigungsvorgang des Abgasturboladers wieder zur Ververfügung zu haben. Die Umschaltung vom Motorbetrieb in den Generatorbetrieb und umgekehrt wird abhängig vom Drehzahlwert des Abgasturboladers, vom Spannungswert der Batterie und vom Beschleunigungssignalwert mittels eines mechanischen oder elektronischen Umschaltrelais vorgenommen, wobei bei Generatorbetrieb Energie über eine ungesteuerte Gleichrichterbrücke an die Batterie geliefert wird und bei Motorbetrieb Energie aus der Batterie über einen von der Steuereinrichtung gesteuerten Wechselrichter in die Ständerwicklung des Elektromotors eingespeist wird. Die Gleichrichterbrücke und der Wechselrichter können dabei auch durch einen in zwei Richtungen betreibbaren Stromrichter ersetzt werden. Durch die bekannte Betriebsart ist zwar eine rasche Beschleunigung des Verbrennungsmotors erreichbar. Eine raucharme Verbrennung ist dabei aber ebenso wie ein günstiger Brennstoffverbrauch nicht erzielbar, aus folgenden Gründen. Direkt proportional dem von einem Beschleunigungsgeber abgegebenen Signal wird der Brennkraftmaschine Brennstoff in entsprechender Menge zugeführt. Diese zugeführte Brennstoffmenge erfordert aber für eine raucharme Verbrennung, also bei optimalem Brennstoff-Luftverhältnis, eine ganz bestimmte Verbrennungsluftmenge. Wenn nun aber im bekannten Fall Abgas mit einer überschüssigen Energie erzeugt werden soll, dann ist dies dort nur unter Inkaufnahme einer überhöhten Brennstoffzufuhr zur Brennkraftmaschine möglich, was zwangsläufig zu einem für die Verbrennung ungünstigen Brennstoff-Luftverhältnis und damit zu einer Abgastrübung führen muß. Weder diese überhöhte Brennstoffzufuhr noch das sich ergebende Brennstoff-Luftverhältnis zur Erzeugung anderweitig ausnützbarer Abgasüberschußenergie sind erwünscht. Die erhöhte Brennstoffmenge steigert die Betriebskosten. Die verschlechterte Abgaszusammensetzung ist in der Regel insbesondere aus Sicht der geltenden Abgasbestimmungen nicht zulässig.

Durch die FR-A-2 183 337 ist ein mit einem Abgasturbolader versehener Verbrennungsmotor bekannt, bei dem durch entsprechende Regelung des Turboladers eine Leistungsanpassung des Verbrennungsmotors an wechselnde Belastungen erreicht wird. Hierzu ist eine Regeleinrichtung vorgesehen, die aus den zugeführten Istwerten der Drehzahl und des Ladeluftdruckes des Verbrennungsmotors sowie dem Beschleunigungssollwert desselben ein Regelsignal für einen mit dem Turbolader gekuppelten elektrischen Motor bildet. Auf diese Weise wird die Leistung des elektrischen Motors solange hoch geregelt, bis der Ist- und Sollwert des Ladeluftdruckes gleich sind. Steht überschüssige Abgasenergie zur Verfügung, so kann der elektrische Motor durch die Regeleinrichtung in Generatorbetrieb umgesteuert werden. Die vom Generator erzeugte elektrische Energie wird einer Batterie zugeführt, die für den Motorbetrieb die Antriebsenergie liefert. Da der Abgasturbolader in einem großen Betriebsbereich arbeiten muß, sind entsprechende Verbesserungen an ihm vorgenommen, durch die sichergestellt wird, daß in dem gesamten Betriebsbereich das sogenannte Pumpen des Verdichters nicht auftreten kann. Dieser bekannte Verbrennungsmotor dient als Antrieb für Lastwagen. Daher soll vor allem das Drehmomentverhalten im unteren Drehzahlbereich durch eine Steigerung des Ladeluftdruckes und die dadurch mögliche höhere Brennstoffzufuhr verbessert werden. Bei dem bekannten Verbrennungsmotor steht dem Regler kein Beschleunigungssignal als Sollführungsgröße zur Verfügung, so daß dem Verbrennungsmotor unbegrenzt Brennstoff zugeführt werden kann. Damit findet keine raucharme Verbrennung statt, weil das hierfür notwendige optimale Verbrennungsluftverhältnis nicht vorliegt.

Bei einer aus der DE-A-2 206 450 bekannten Steuereinrichtung für einen Verbrennungsmotor mit einem Abgasturbolader sind auf einer gemeinsamen Welle eine Abgasturbine und ein Verdichter angeordnet. Die Welle ist von einem Elektromotor antreibbar, der so gesteuert ist, daß bei Leistungsüberschuß in den Abgasen der Elektromotor vom Motorbetrieb in den Generatorbetrieb überführt und elektrische Energie an ein von einer Speisequelle gespeistes Netz geliefert wird. Entscheidendes Beurteilungs- und Vergleichskriterium ist dabei, daß der dort vorgesehene regelbare Elektromotor durch eine entsprechende Steuerung die Drehzahl des abgekoppelten Abgasturboladers im gesamten Lastbereich der Brennkraftmaschine konstant hält. Dies bedeutet, daß der Verdichter des Abgasturboladers immer, d.h. unabhängig von der jeweiligen Belastung der Brennkraftmaschine eine konstant hohe Leistung erbringt, mit der Folge, daß der Brennkraftmaschine immer eine konstant hohe Luftmenge mit konstant hohem Ladeluftdruck angeboten wird. Wenn die Brennkraftmaschine nun beispielsweise aus dem Leerlauf heraus beschleunigt werden soll, dann erzwingt der im unteren und mittleren Teillastbereich gegebene Luftüberschuß eine erhöhte Brennstoffzufuhr, um das im Verbrennungsmotor erforderliche Brennstoff-Luftverhältnis zu gewährleisten.

Entsprechend einem weiteren Kriterium ist bei dieser bekannten Lösung die Steuereinrichtung so ausgebildet, daß der Elektromotor bei einem Leistungsüberschuß an der Abgasturbine in den Generatorbetrieb umschaltbar ist und dann elektrische Energie in das von der Energiequelle gespeiste Netz liefert. Unter der Voraussetzung, daß der Elektromotor im Motorbetrieb den Abgasturbolader über den gesamten Lastbereich der Brennkraftmaschine mit konstant hoher Drehzahl, d.h. für konstant hohen Ladeluftdruck und konstant hohe Ladeluftmenge antreibt, kann ein solcher die Umschaltung des Elektromotors vom Motorbetrieb auf Generatorbetrieb verursachender Leistungsüberschuß in den der Abgasturbine zugeführten Abgasen für eine Umwandlung in elektrische Energie nur durch eine überhöhte Brennstoffzufuhr erzielt werden.

Es ist daher Aufgabe der Erfindung, eine Steuereinrichtung der eingangs definierten Art so zu verbessern, daß im Betrieb der Brennkraftmaschine mit einem gegenüber den bekannten Ausführungen geringeren Brennstoffverbrauch sowohl eine bessere Beschleunigung derselben im Teillastbereich, insbesondere beim Start und im unteren Teillastbereich, als auch eine günstigste Umwandlung von überschüssiger Abgasenergie in elektrische Energie möglich ist, die nicht wie in den bekannten Fällen einer Batterie, sondern einem hiermit zu versorgenden, im Umfeld der Brennkraftmaschine vorhandenen Abnehmer zugeführt werden soll, dessen spezifische Gegebenheiten bei der Auslegung der Steuereinrichtung ebenfalls berücksichtigt werden müssen.

Diese Aufgabe wird bei einer Steuereinrichtung der eingangs genannten Art durch die im Kennzeichen des Anspruches 1 angegebenen Merkmale gelöst.

Mit einer derartigen Steuereinrichtung kann bei immer optimiertem Verbrennungs-Luftverhältnis jede beliebige an die gewünschte Betriebsweise angepaßte Beschleunigung der Brennkraftmaschine erreicht werden. Darüberhinaus wird durch das immer optimierte Verbrennungs-Luftverhältnis eine nennenswerte Reduzierung des Brennstoffverbrauches erzielt. Auch im Generatorbetrieb ist durch eine bessere Nutzung der im Abgas enthaltenden Energie der Systemwirkungsgrad erheblich verbessert, weil selbst im höheren Drehzahlbereich und Lastbereich der Brennkraftmaschine immer das günstigste Verbrennungs-Luftverhältnis gegeben ist. Letzteres wird insbesondere auch dadurch sichergestellt, das die Steuereinrichtung in Vetbindung mit einem Abgasturbolader angewandt wird, der eine optimierte Auslegung der Beschaufelung von Abgasturbine und Verdichter für einen hohen Wirkungsgrad besitzt und so ausgelegt ist daß zur Erzeugung der im oberen Lastbereich der Brennkraftmaschine erforderlichen Luftmenge mit für optimales Verbrennungs-Luftverhältnis erforderlichem Ladeluftdruck nicht die gesamte Verfügbare Abgasmenge ausgenützt werden muß und die ohne erhöhte Brennstoffzufuhr erzielbare überschüssige Abgasenergie für die Umwandlung in elektrische Energie nutzbar ist. Dieser entscheidende Fortschritt ist mithin erst durch die Optimierung der Abgasturbolader möglich geworden, wobei dieser Fortschritt sich beispielsweise bei der Anwendung der Brennkraftmaschine als Antriebsorgan auf Schiffen unter Verwendung der erfindungsgemäßen Steuereinrichtung insofern als besonders vorteilhaft erweist, weil in vielen Fällen die aus der überschüssgen Abgasenergie durch entsprechende Umwandlung erzielbare elektrische Energie alleine schon ausreicht, das gesamte elektrische Bordnetz und die daran angeschlossenen Verbraucher hinreichend zu versorgen. Dies wiederum ermöglicht eine hinsichtlich ihrer Leistungsgröße vergleichsweise kleinere Auslegung der an Bord eines Schiffes unabhängig von der Brennkraftmaschinenanlage vorhandenen Diesel-Generatoranlage, die jene elektrische Energie erzeugt, die den Grundbedarf des vorhandenen elektrischen Bordnetzes und der daran angeschlossenen Verbraucher sicherstellt.

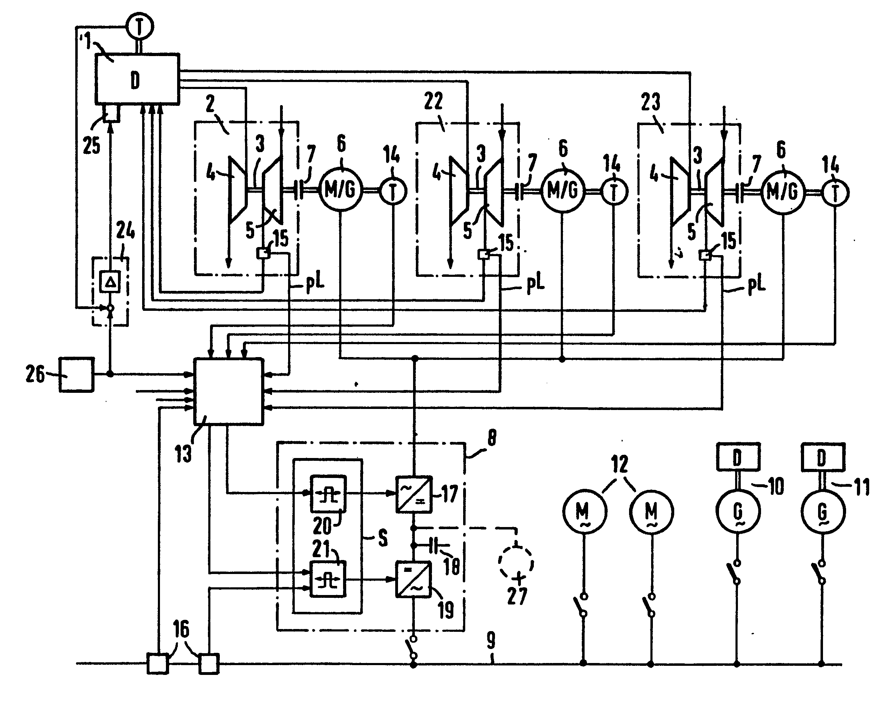

Ein Ausführungsbeispiel der Erfindung ist in der Zeichnung schematisch dargestellt.

In der Figur ist mit 1 ein Dieselmotor bezeichnet, dem ein Abgasturbolader 2 zugeordnet ist, der aus einer auf einer gemeinsamen Welle 3 angeordneten Abgasturbine 4 und einem Verdichter 5 besteht. Der Abgasturbolader ist von einem Elektromotor 6 antreibbar und über eine Kupplung 7 mit der Welle 3 verbunden.

Der Verbrennungsmotor 1 ist mit einem Regler 24 zur Regelung der Brennstoffzufuhr über das Brennstoffeinspritzsystem 25 ausgerüstet. Die Motorleistung wird über einen Sollwertgeber 26 als Führungsgröße vorgegeben.

Der von einer eigenen Regeleinrichtung gesteuerte Elektromotor 6 ist über einen Stromrichter 8 mit dem Netz 9 verbunden, das von Diesel-Generatorsätzen 10, 11 gespeist wird. An das Netz 9 sind Verbraucher 12, wie Heizung, Klimaanlagen, Transformatoren, Beleuchtung und dergleichen angeschlossen.

Die Regeleinrichtung für den Elektromotor 6 ist als Recheneinrichtung 13 ausgebildet, welcher die dem Regler 24 des Verbrennungsmotors zugeführte Führungsgröße als Sollwert zugeleitet wird. Die Recheneinrichtung 13 erhält außerdem von Meßfühlern Steuergrößen und zwar von einem z. B. als Tachogenerator ausgebildeten Meßfühler 14 einen der Drehzahl des Abgasturboladers 2 proportionalen Wert als Istwert und/oder von einem Meßfühler 15 einem den Ladeluftdruck $P_L$ proportionalen Wert als Istwert. Darüberhinaus wird von einem Meßfühler 16 ein der Spannung und/oder der Frequenz des Netzes 9 proportionaler Istwert der Recheneinrichtung 13 zugeführt.

Die Recheneinrichtung 13 errechnet aus den zugeführten Soll- und Istwerten und aus gespeicherten Werten, insbesondere aus dem Verlauf des Ladedruckes oder dem Verlauf der zugespeisten Leistung des Elektromotors 6 als Funktion der Leistung des Verbrennungsmotors 1 Steuerwerte für den Steuersatz 5 des Stromrichters 8, bei denen sich im Motorbetrieb des Elektromotors 6 eine möglichst rasche Beschleunigung des Verbrennungsmotors 1 bei trotzdem für eine raucharme Verbrennung optimalen Verbrennungsluftverhältnissen λ einstellt. Die Steuerwerte, die dem Stromrichter über den Steuersatz S zugeführt werden, bestimmen die Leistung und damit die Drehzahl des Elektromotors 6.

Bei Leistungsüberschuß in den Abgasen wird der Elektromotor durch entsprechende Ansteuerung des Stromrichters vom Motorbetrieb in den Generatorbetrieb überführt.

Der Stromrichter 8 ist zweckmäßigerweise als Pulswechselrichter mit Gleichspannungszwischenkreis ausgebildet und enthält einen maschinengeführten Wechselrichter 17, der über einen Gleichspannungszwischenkreis 18 mit einem netzgeführten Umkehrstromrichter 19 verbunden ist. Der Wechselrichter 17 wird vom Steuergerät 20 angesteuert, dem entsprechende Steuerwerte von der Recheneinrichtung 13 zugeführt werden. In ähnlicher Weise ist dem netzgeführten Umkehrstromrichter 19 ein Steuergerät 21 zugeordnet, das vom Rechner 13 entsprechende Steuerwerte und vom Netz 9 Referenzwerte erhält.

Im Generatorbetrieb des Elektromotors 6 ist ein Maximum der überschüssigen Abgasenergie als Elektroenergie in das Netz 9 einspeisbar oder einem netzunabhängigen Verbraucher 27 zuführbar.

Die Umschaltung vom Motorbetrieb in den Generatorbetrieb und umgekehrt wird abhängig von einem vorgebbaren Wert oder abhängig von einem von der Recheneinrichtung 13 errechneten Wert des Ladeluftdruckes oder der Leistung des Verbrennungsmotors 1 gesteuert. Dabei bestimmen die dem Stromrichter 8 zugeführten Steuerwerte die von dem als Generator arbeitenden Elektromotoren 6 abgegebene Leistung.

Besondere Vorteile ergeben sich durch die Anwendung der Steuereinrichtung in Verbindung mit einem Abgasturbolader 2, der aufgrund einer optimierten Auslegung der Beschaufelung von Turbine 4 und Verdichter 5 einen solchen Wirkungsgrad besitzt, daß zur Erzeugung der im oberen Lastbereich der Brennkraftmaschine notwendigen Ladeluftmenge und des Ladeluftdruckes nicht die gesamte verfügbare Abgasenergie verwendet wird und die dadurch ohne erhöhte Brennstoffzufuhr überschüssige Abgasenergie für die Umwandlung in elektrische Energie nutzbar ist. Eine Optimierung wird beispielsweise durch Anwendung von Verdichterrädern mit rückwärts gekrümmten Schaufeln und/ oder verstellbaren Leitapparaten erzielt.

Abhängig von der Leistung oder Zylinderzahl des Verbrennungsmotors 1 können mehrere Abgasturbolader eingesetzt werden. Im vorliegenden Fall sind dem Verbrennungsmotor 1 zusätzlich zum Abgasturbolader 2 weitere Abgasturbolader 22, 23 zugeordnet, die von der Recheneinrichtung 13 gemeinsam angesteuert und deren Elektromotoren 6 über den gemeinsamen Stromrichter 8 betrieben werden.

Bei Ausbildung der Elektromotoren 6 als Asynchronmotoren verhalten sie sich bei Verstellung der Spannung und Frequenz wie übliche Maschinen an einem gemeinsamen Netz.

Die Elektromotoren 6 können auch als Synchronmaschinen, insbesondere permanenterregte Synchronmaschinen, ausgebildet sein.

Es ist zweckmäßig, den Elektromotor 6 mit einer Sprühölkühlung auszurüsten. Dadurch wird eine gedrängte Bauweise erzielt und ein Einbau z. B. in den Ansaugschalldämpfer des Abgasturboladers 2 bzw. 22 bzw. 23 ermöglicht.

Bezugszeichenliste
1 Dieselmotor
2 Abgasturbolader
3 Welle
4 Abgasturbine
5 Verdichter
6 Elektromotor
7 Kupplung
8 Stromrichter
9 Netz
10, 11 Diesel-Generatorsätze
12 Verbraucher
13 Recheneinrichtung
14, 15, 16 Meßfühler
17 Wechselrichter
18 Gleichspannungszwischenkreis
19 Umkehrstromrichter
20, 21 Steuergerät
22, 23 Abgasturbolader
24 Regler
25 Brennstoffeinspritzsystem
26 Sollwertgeber
S Steuersatz
$P_L$ Ladeluftdruck

**Patentansprüche**

1. Steuereinrichtung für einen mit einem Abgasturbolader ausgerüsteten Deisel-Motor, wobei der Abgasturbolader (2) aus einer auf einer gemeinsamen Welle angeordneten Abgasturbine (4) und einem Verdichter (5) besteht und mit einer wahlweise als Motor oder Generator betreibbaren elektrischen Maschine (6) gekoppelt ist, die bei Leistungsüberschuß in den Abgasen vom Motorbetrieb in den Generatorbetrieb überführbar ist und über einen Stromrichter elektrische Energie an einen Netz mit Speicher liefert, welche Steuereinrichtung ein programierbares Steuerglied (13) enthält, dem mittels entsprechender Geberglieder (14, 16, 26) der Drehzahlistwert des Abgasturboladers (2), der Spannungsistwert des elektrischen Speichers (9) und der Beschleunigungssollwert des Verbrennungsmotors (1) zugeführt sind, welches Steuerglied (13) aus den vorprogrammierten und den zugeführten Werten Steuerwerte für den Stromrichter (8) bildet, durch die im Motorbetrieb der elektrischen Maschine (6) eine rasche Beschleunigung des Verbrennungsmotors (1) erreicht und im Generatorbetrieb die Rückspeisung der elektrischen Energie geregelt wird, gekennzeichnet durch folgende Merkmale:

a) das Netz ist ein Wechselspannungsnetz (9) insbesondere ein Bordnetz;

b) das Steuerglied ist eine Recheneinrichtung (13), der mittels entsprechender Meßfühler (15 und 16) ferner der Istwert des Ladeluftdruckes und der Istwert der Frequenz des Netzes zugeführt sind;

c) die Recheneinrichtung (13) errechnet aus sämtlichen vorgenannten Istwerten sowie aus einer eingespeicherten Kennlinie, insbesondere der auf die Leistung des Verbrennungsmotors (1) bezogenen Ladeluftdruckkennlinie oder der ebenfalls auf die Leistung des Verbrennungsmotors (1) bezogenen Leistungskennlinie der elektrischen Maschine (6) im Motorbetrieb, Steuerwerte für den Stromrichter (8), durch die beim Motorbetrieb der elektrischen Maschine (6) eine möglichst rasche Beschleunigung des Verbrennungsmotors (1) mit für eine raucharme Verbrennung optimalen Verbrennungsluftverhältnisses (λ) und im Generatorbetrieb der elektrischen Maschine (6) ein maximaler Gewinn von elektrischer Energie aus den Abgasen erreichbar ist;

d) die Umschaltung vom Motor- in den Generatorbetrieb und umgekehrt erfolgt entweder in Abhängigkeit von einem vorgegebenen oder von der Recheneinrichtung (13) errechneten Wert des Ladeluftdruckes oder in Abhängigkeit von der Leistung des Verbrennungsmotors (1);

e) der Abgasturbolader besitzt eine optimierte Auslegung der Beschaufelung von Abgesturbine (4) und Verdichter (5) für einen hohen Wirkungsgrad und ist so ausgelegt, daß zur Erzeugung der im oberen Lastbereich des Verbrennungsmotors (1) erforderlichen Ladeluftmenge mit einem ein optimales Verbrennungsluftverhältnis (λ) ergebenden Ladeluftdruck nicht die gesamte verfügbare Abgasmenge erforderlich ist, so daß ohne erhöhte Brennstoffzufuhr überschüssige Abgasenergie für die Umwandlung in elektrische Energie verfügbar ist.

2. Steuereinrichtung nach Anspruch 1, dadurch gekennzeichnet, daß der Elektromotor (6) als Asynchronmaschine ausgebildet ist.

3. Steuereinrichtung nach Anspruch 1, dadurch gekennzeichnet, daß der Elektromotor (6) als Synchronmaschine, insbesondere permanenterregte Synchronmaschine ausgebildet ist.

## Claims

1. Control for diesel engine equipped with an exhaust gas turbosupercharger, the exhaust gas turbosupercharger (2) consisting of an exhaust gas turbine (4) and a compressor (5), arranged on a common shaft, and is coupled with an electric machine (6) which can either be operated as a motor or as a generator as desired, which electric machine, in the case of surplus power in the exhaust gases, can be converted from the motor operation to the generator operation and via a converter delivers electric energy to a power supply with an accumulator, which control contains a programmable control unit (13) to which, by means of corresponding transmission components (14, 16, 26), the rotational speed actual value of the exhaust gas turbosupercharger (2), the voltage actual value of the electric accumulator (9) and the acceleration reference value of the combustion engine (1) are supplied, which control component (13) forms control values for the converter from the preprogrammed and the supplied values, through which a rapid acceleration of the combustion engine (1) in the motor operation of the electric machine (6) is reached and the feeding back of the electric energy in the generator operation is regulated, characterised in that:

a) the power supply is an alternating current voltage power supply (9), in particular a mains power supply;

b) the control component is a calculating device (13) to which by means of corresponding primary elements (15 & 16), the actual value of the supercharge air pressure and the actual values of the frequency of the power supply are supplied;

c) the calculating device (13) calculates control values for the converter (8) from all the previously named actual values, as well as from a stored characteristic curve, in particular from the supercharge air pressure characteristic curve related to the power of the combustion engine (1), or from the power characteristic curve of the electric machine (6) in the motor operation, likewise related to the power of the combustion engine (1), through which control values, during the motor operation of the electric machine (6) an acceleration as rapid as possible of the combustion engine (1) with a combustion air ratio (λ) which is optimal for a low-smoke combustion, and in the generator operation maximum benefit from the electric energy from the exhaust gases, can be achieved.

d) the conversion from motor to generator operation and vice versa takes place either in dependence on a value of the supercharge air pressure which is calculated by the calculating device (13), or in dependence on the power of the combustion engine (1);

e) the exhaust gas turbosupercharger has an optimal layout of the blades of the exhaust gas turbine (4) and compressor (5) for a high degree of efficiency, and is laid out in such a way that for the production of the required supercharge air quantity in the upper load area of the combustion engine (1) with a supercharge air pressure giving an optimal combustion air ratio ($\lambda$), not the entire available exhaust gas quantity is required, so that without increased fuel addition, exhaust gas energy is available for converting into electric energy.

2. Control according to Claim 1, characterised in that the electromotor is constructed as an asynchronous machine.

3. Control according to Claim 1, characterised in that the electromotor (6) is constructed as a synchronous machine, in particular a permanently activated synchronous machine.

**Revendications**

1. Dispositif de commande pour un moteur Diesel équipé d'un turbocompresseur à gaz d'échappement et dans lequel le turbocompresseur à gaz d'échappement (2) est constitué par une turbine à gaz d'échappement (4) et un compresseur (5), montés sur un arbre commun, et est accouplé à une machine électrique (6) qui peut fonctionner au choix en tant que moteur ou génératrice et qui, dans le cas d'un excès de puissance dans les gaz d'échappement, peut être commutée du fonctionnement en moteur au fonctionnement en génératrice et délivre, par l'intermédiaire d'un convertisseur statique, une énergie électrique à un réseau comportant un accumulateur, ledit dispositif de commande contenant un circuit de commande programmable (13) auquel sont envoyées, au moyen de capteurs correspondants (14, 16, 26), la valeur réelle de la vitesse de rotation du turbocompresseur à gaz d'échappement (2), la valeur réelle de la tension de l'accumulateur électrique (9) et la valeur de consigne de l'accélération du moteur à combustion interne (1), ce circuit de commande (13) formant, à partir des valeurs programmées d'avance et des valeurs envoyées, des valeurs de commande pour le convertisseur statique (8), à l'aide desquelles, lorsque la machine électrique (6) fonctionne en moteur, une accélération rapide du moteur à combustion interne (1) est obtenue et, dans le cas du fonctionnement en génératrice, l'alimentation en retour de l'énergie électrique est réglée, caractérisé par les caractéristiques suivantes:

a) le réseau est un réseau à tension alternative (9), notamment un réseau de bord;

b) le circuit de commande est un dispositif de calcul (13) auquel, en outre, la valeur réelle de la pression de l'air de suralimentation et la valeur réelle de la fréquence du réseau sont envoyées au moyen de capteurs correspondants de mesure (16 et 16);

c) à partir de toutes les valeurs réelles indiquées précédemment ainsi qu'à partir d'une courbe caractéristique mémorisée, notamment à partir de la courbe caractéristique de la pression de l'air de suralimentation rapportée à la puissance du moteur à combustion interne (1) ou bien à partir de la courbe caractéristique de puissance, également rapportée à la puissance du moteur à combustion interne (1), de la machine électrique (6), dans le cas du fonctionnement en moteur, le dispositif de calcul (13) calcule des valeurs de commande pour le convertisseur de courant (8), au moyen desquelles on peut obtenir, lors du fonctionnement de la machine électrique (6) en moteur, une accélération aussi rapide que possible du moteur à combustion interne (1) avec un rapport ($\lambda$) de l'air de combustion, optimal pour une combustion produisant peu de fumée, et, lors du fonctionnement de la machine électrique (6) en génératrice, un gain maximum d'énergie électrique à partir des gaz d'échappement;

d) la commutation du fonctionnement en moteur en fonctionnement en génératrice et inversement s'effectue soit en fonction d'une valeur de la pression de l'air de suralimentation, prédéterminée ou calculée à partir du dispositif de calcul (13), soit en fonction de la puissance du moteur à combustion interne (1);

e) dans le turbocompresseur à gaz d'échappement, les ailettes de la turbine à gaz (4) et du compresseur (5) possèdent une conception optimisée pour l'obtention d'un rendement élevé et le turbocompresseur à gaz d'échappement est agencé de telle sorte que, pour la production de la quantité d'air de suralimentation nécessaire dans la plage supérieure de charge du moteur à combustion interne (1), avec un rapport optimal ($\lambda$) de carburant-air de combustion, il n'est pas nécessaire d'utiliser toute la quantité disponible des gaz d'échappement de sorte que sans aucune alimentation accrue en combustible, une énergie excédentaire des gaz d'échappement est disponible pour la conversion en énergie électrique.

2. Dispositif de commande suivant la revendication 1, caractérisé par le fait que le moteur électrique (6) est réalisé sous la forme d'une machine asynchrone.

3. Dispositif de commande suivant la revendication 1, caractérisé par le fait que le moteur électrique (6) est réalisé sous la forme d'une machine synchrone, notamment d'une machine synchrone à excitation permanente.